# FASCICULE DE BREVET EUROPEEN

(11) **EP 1 091 273 B1**
(45) Date de publication et mention de la délivrance du brevet: **05.10.2005**
(21) Numéro de dépôt: 99811103.3
(22) Date de dépôt: 30.11.1999
(51) Int. Cl.: G05D 1/02, G05D 1/00

(54) **Robot mobile et procédé de commande d'un robot mobile**
Mobiler Roboter und Steuerverfahren für einen mobilen Roboter
Mobile robot and method for controlling a mobile robot

(30) Priorité: 31.08.1999 US 151757 P
(43) Date de publication de la demande: 11.04.2001
(73) Titulaire: Swisscom AG, 3050 Bern (CH)
(72) Inventeur: Van Kommer, M. Robert, 1752 Villars-sur Glâne (CH)
(74) Mandataire: P&TS Patents & Technology Surveys SA

(56) Documents cités:
- DE-A- 19 624 680
- US-A- 5 446 445
- US-A- 5 610 818
- PATENT ABSTRACTS OF JAPAN vol. 1999, no. 08, 30 juin 1999 (1999-06-30) & JP 11 058282 A (AGENCY OF IND SCIENCE &TECHNOL; NIPPON KOEI CO LTD), 2 mars 1999 (1999-03-02)

## Description

La présente invention concerne un robot mobile, en particulier un robot mobile comprenant un téléphone apte à se déplacer de manière autonome.

On connaît déjà des robots mobiles aptes à se déplacer de façon autonome sous la commande d'une unité de traitement réagissant en fonction de signaux fournis par un ou plusieurs capteurs. On a par exemple déjà réalisé des robots comportant une ou plusieurs caméras, un radar, des micros, etc., et capables de se déplacer dans un environnement complexe et d'y remplir une mission.

On connaît par ailleurs des robots télécommandés au moyen d'un système radio sans fil. La télécommande utilise généralement une interface propriétaire prévue spécifiquement pour cette application; aucune autre communication n'est attendue sur le canal radio réservé pour la commande du robot. Le robot ne vérifie donc généralement pas l'identité de l'opérateur cherchant à le commander.

On a vu aussi apparaître des robots mobiles commandés au travers du réseau Internet. Dans ce cas, des procédures d'authentification et de sécurisation classiques, au moyen de mots de passe et de firewalls par exemple, doivent être mis en oeuvre pour éviter qu'un utilisateur non autorisé ne puisse prendre la commande du robot.

On connaît également des robots mobiles commandés par commande vocale, utilisés par exemple mais pas exclusivement dans l'industrie du divertissement et du jouet. Ces robots sont capables d'analyser les commandes vocales d'un opérateur à proximité, et d'obéir à ces commandes. Certains robots mobiles comportent également un module de synthèse vocale, permettant de générer des réponses vocales restituées par un haut-parleur.

US5446445 décrit un robot avec un téléphone mobile utilisé pour la détection et la signalisation de situations d'alarme, par exemple d'incendies. Ce robot ne peut pas être piloté ou commandé par des commandes vocales.

DE19624680 concerne un robot à commande vocale utilisé pour des opérations chirurgicales.

JP11-058282 et US5610818 décrivent des robots pilotés par un téléphone mobile. Cependant la liaison téléphonique est utilisée pour la transmission de données uniquement ; ces robots ne sont pas commandés vocalement.

Un but de la présente invention est de proposer un nouveau type de robot mobile, et un nouveau procédé de commande de robot mobile.

En particulier, un but de la présente invention est de proposer un nouveau type de robot mobile, et un nouveau procédé de commande de robot mobile, offrant une plus grande souplesse de commande du robot mobile.

Selon l'invention, ces buts sont atteints au moyen d'un robot mobile et d'un procédé comprenant les caractéristiques des revendications indépendantes correspondantes. Des modes de réalisation préférentiels sont par ailleurs indiqués dans les revendications dépendantes et dans la description donnée à titre d'exemple.

En particulier, ces buts sont atteints au moyen d'un robot mobile comprenant des moyens de déplacement autonomes, un microphone, un haut-parleur, un équipement de téléphonie mobile cellulaire, ainsi qu'un module d'analyse vocale, apte à interpréter des commandes vocales reçues au travers dudit équipement de téléphonie vocale pour commander les déplacements dudit robot mobile.

Ce robot présente l'avantage de pouvoir être commandé vocalement soit par un opérateur humain à proximité, au travers du microphone incorporé, soit par un opérateur éloigné au travers d'un réseau de télécommunication, par exemple au travers d'un réseau téléphonique mobile publique (GSM ou UMTS par exemple).

Par ailleurs, il permet d'établir une communication vocale au travers d'un réseau mobile entre un opérateur humain à proximité du robot mobile et un opérateur distant, connecté à n'importe quel point du réseau téléphonique, au travers d'un équipement téléphonique conventionnel.

L'invention permet par ailleurs de réaliser un réseau de téléphonie mobile, comprenant au moins un noeud mobile constitué par un robot mobile, dans lequel la position des noeuds mobiles peut être commandée au moyen de commandes vocales envoyées depuis n'importe quel noeud du réseau et analysée dans lesdits noeuds mobiles.

Dans une variante de l'invention, le robot mobile est en outre pourvu d'au moins une caméra et de moyens de restitution visuels, par exemple d'un écran, ainsi que d'un téléphone cellulaire de troisième génération permettant la transmission d'images et de données multimédia. Cette variante permet d'étendre les possibilités de communication à l'aide de technologies de traitement d'image.

L'invention sera mieux comprise à l'aide de la description d'un exemple préférentiel, illustré par les figures annexées qui montrent:
La figure 1 une représentation schématique d'un système de communication comprenant un robot mobile selon l'invention.
La figure 2 une représentation schématique d'un réseau de téléphonie mobile comprenant des noeuds mobiles selon la présente invention.

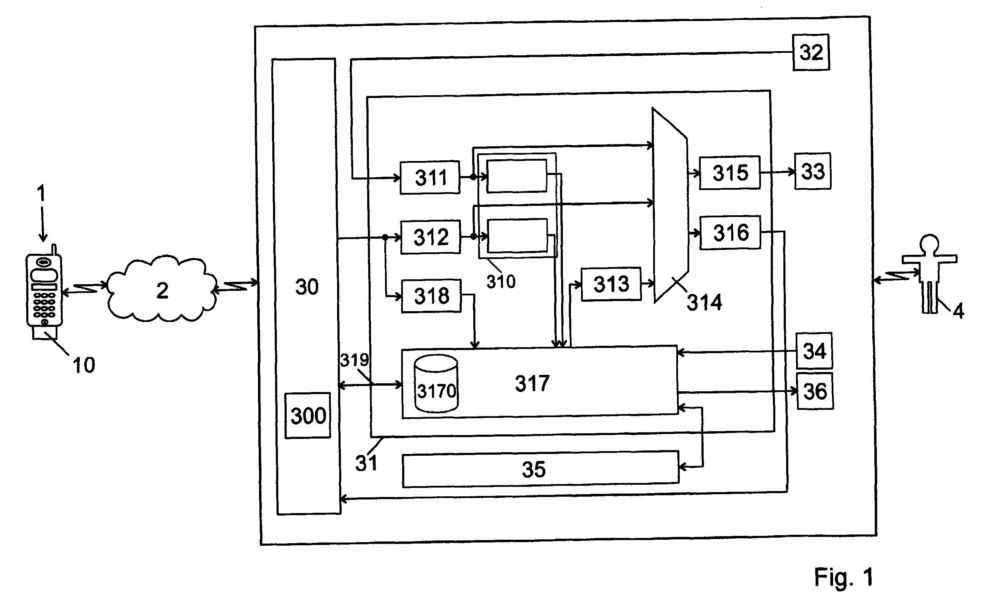

La figure 1 illustre un exemple de robot mobile 3 pouvant être commandé par l'intermédiaire d'un réseau de téléphonie mobile 2. Par robot mobile, on entend dans la suite de la description et dans les revendications un robot muni de moyens de déplacement autonomes 35, par exemple de roues, et d'une unité de traitement 31, par exemple d'un microprocesseur, d'un microcontrôleur ou d'un ordinateur, apte à exécuter un programme pour commander les fonctions du robot, notamment ses déplacements, en fonction de signaux provenant d'un ou plusieurs capteurs sur le robot et/ou de commandes de haut niveau envoyées au robot par un opérateur. La présente invention s'applique tout particulièrement aux "petits" robots, c'est-à-dire aux robots de taille inférieure à celle de l'opérateur humain.

Le robot illustré sur la figure 1 comprend un module de déplacement 35, par exemple un moteur électrique, entraînant des roues non représentées et commandé par l'unité de traitement 31. L'ensemble du robot est alimenté de manière autonome par une alimentation électrique autonome, par exemple un accumulateur ou un panneau photovoltaïque.

Un programme informatique mémorisé dans une zone de mémoire non représentée de l'unité de traitement 31 permet de commander l'ensemble des fonctions du robot. Ce programme est de préférence écrit dans un langage orienté objet, par exemple C++, IDL de CORBA ou JAVA (marque déposée de SUN Microsystems), mais peut aussi comprendre des modules rédigés dans un langage itératif ou par programmation d'un réseau neuronal.

Le robot 3 comprend par ailleurs un microphone 32 et d'autres capteurs 34, par exemple une caméra, un capteur de touche, un accéléromètre, un radar, des capteurs biométriques, etc., lui permettant d'appréhender son environnement.

Un haut-parleur 33 ainsi que d'autres moyens de restitution 36, par exemple un écran d'affichage, lui permettent de communiquer avec cet environnement, notamment avec un opérateur humain 4 à proximité du robot.

Selon l'invention, le robot mobile comprend un module de téléphonie mobile 30, lui permettant de se connecter dans un réseau téléphonique public 2, par exemple un réseau de type GSM, AMPS, TDMA, CDMA, TACS, PDC, HSCCD, GPRS, EDGE ou UMTS, ou dans un réseau de troisième génération (3G), par exemple utilisant la technologie WAP (Wireless Application Protocole), ou encore dans un réseau fixe auquel le module se connecte via une interface sans fil de type DECT par exemple. Le module 30 lui permet d'établir une communication vocale ou audiovisuelle bidirectionnelle ("full-duplex") avec n'importe quel dispositif terminal 1 connecté au réseau de téléphonie 2.

Dans une variante préférentielle, l'interface 30 est constituée par un téléphone mobile conventionnel intégré dans le robot mobile. Le téléphone mobile comporte de préférence un module d'identification d'abonné 300, par exemple une carte SIM amovible, permettant d'identifier le robot mobile dans le réseau de télécommunication mobile 2. Dans une première variante, le téléphone mobile 30 peut être muni de moyens de manipulation, par exemple d'un clavier, et d'un affichage, permettant à l'opérateur humain 4 d'utiliser le robot mobile 3 pour téléphoner comme avec un téléphone mobile conventionnel. Dans une autre variante, le téléphone mobile 30 est dépourvu de moyens de manipulation et/ou d'affichage.

L'unité de traitement 31 comprend un module 311 permettant de mettre en forme le signal du microphone 32; le module 311 peut par exemple comprendre un amplificateur, un filtre et un convertisseur analogique-numérique à 8KHz par exemple. Un autre module 312 permet de mettre en forme le signal vocal fourni par l'interface 30. Dans le cas où l'interface 30 fournit un signal vocal analogique, le module 312 comprendra par exemple un amplificateur, un filtre et un convertisseur analogique-numérique à 8KHz par exemple; dans le cas où l'interface 30 fournit un signal numérique, le module 312 pourra comprendre un module de conversion de format de données.

Les signaux mis en forme du microphone 32 et du téléphone mobile 30 sont fournis à l'entrée d'un multiplexeur 314 et d'un module d'analyse vocal 310. Le module d'analyse vocale 310 peut par exemple utiliser un réseau de neurones, des réseaux de Markov cachés ou un système hybride, et est entraîné pour reconnaître des commandes vocales destinées au robot dans les flux vocaux provenant du microphone 32 et du téléphone mobile 30. Dans le cas d'un robot mobile susceptible d'être commandé par un grand nombre d'opérateurs potentiels, le module d'analyse vocale est autant que possible entraîné au moyen d'extraits de voix d'un échantillon d'opérateurs représentatif de la population de tous les opérateurs. Dans le cas d'un robot commandé par un seul opérateur 1 ou 4, le module d'analyse vocale pourra être entraîné à l'analyse de la voix de cet opérateur, par exemple au cours d'une phase d'apprentissage ("speaker dependant recognition").

Les commandes décodées par le module d'analyse vocale 310 sont fournies à l'entrée d'une machine séquentielle 317, comprenant de préférence un programme informatique mémorisé dans une zone de mémoire et un processeur apte à exécuter ce programme informatique. La machine séquentielle 317 reçoit également des signaux directement du téléphone mobile 30 au travers d'une interface CIT 319 (Computer Integrated Telephone), par exemple une interface TAPI conventionnelle, qui permet à la machine séquentielle 317 de commander le téléphone mobile 31, notamment d'établir ou d'interrompre une communication, d'obtenir l'identification d'appelant, etc.. L'état de la machine séquentielle 317 peut en outre dépendre des signaux fournis par les autres capteurs 34 et par le module de déplacement 35.

L'état de la machine séquentielle 317 détermine la valeur des signaux de commande fournis par cette machine, notamment un signal de commande du multiplexeur 314, des signaux de commande du module de déplacement 35, des signaux de commande de l'interface téléphonique 30, des signaux de commande d'un synthétiseur vocal 313 et des signaux de commandes des organes de restitution 35, par exemple d'un affichage 36.

Le synthétiseur vocal 313 commandé par la machine séquentielle 317 permet de générer des réponses vocales aux requêtes et aux commandes vocales de l'opérateur humain 4 ou reçues au travers du réseau mobile 2. Les annonces vocales générées peuvent aussi dépendre de l'état de la machine séquentielle 317, le synthétiseur vocal pouvant ainsi annoncer de lui-même un état particulier du robot mobile, par exemple une alarme, ou un événement détecté.

Le multiplexeur 314 commandé par la machine séquentielle 317 permet de sélectionner le signal de sortie fourni au haut-parleur 33 et le signal de sortie fourni à l'entrée vocale du téléphone mobile 30. En fonction du signal de commande de la machine séquentielle 317, le multiplexeur 314 fournit à chacune de ces deux sorties soit le signal provenant du microphone 32, soit le signal reçu par le téléphone mobile 30, soit le signal généré par le synthétiseur vocal 313.

Un module de mise en forme 315 permet d'adapter le signal de sortie du multiplexeur pour le restituer au moyen du haut-parleur 33. Ce module 315 peut par exemple comprendre un convertisseur numérique analogique et un amplificateur. De la même façon, un module 316 permet de mettre en forme le signal de sortie du multiplexeur destiné au téléphone mobile 30.

L'unité de traitement 31 comprend en outre de préférence un module de vérification d'appelant 318, permettant de contrôler l'identité de l'appelant 1 au moyen de caractéristiques de sa voix. Le résultat fourni par l'unité 31 est fourni à la machine séquentielle 317. Le module 31 peut également, dans une variante non représentée, être utilisé pour vérifier l'identité de l'opérateur humain 4 à proximité du robot mobile 3.

L'unité de traitement comporte en outre de préférence une banque de données d'utilisateurs 3170, dans laquelle le profil des opérateurs 1, 4 1, 4 du robot mobile sont mémorisés. Ce profil comporte de préférence pour chaque opérateur des droits d'accès, décrit plus bas, des préférences, par exemple la langue et/ou la syntaxe des commandes, le niveau d'expertise, etc., des paramètres vocaux facilitant la reconnaissance vocale, une ou plusieurs adresses (par exemple le numéro de téléphone, l'adresse Internet) auxquelles l'opérateur peut ou souhaite être contacté, etc..

Le robot mobile 3 peut en outre comprendre des moyens non représentés de téléchargement de données, par exemple un modem recevant le flux de données provenant du téléphonique mobile 30, et permettant de modifier le programme de commande dans la machine séquentielle 317.

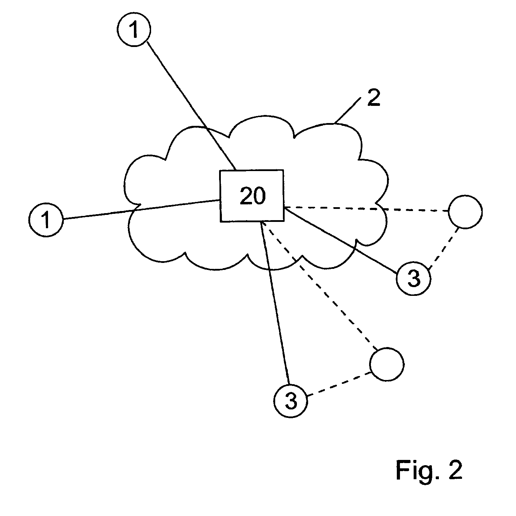

La figure 2 illustre un exemple de réseau mobile 2 comprenant une pluralité de robots mobiles 3 selon l'invention. Le réseau mobile comporte un ou plusieurs centraux 20 auxquels peuvent se connecter une pluralité d'abonnés mobiles 1 et une pluralité de robots mobiles 3. La position de chacun des noeuds 3 du réseau mobile peut être commandée au moyen de commandes vocales transmises depuis n'importe quel noeud 1 ou 3 du réseau mobile 2 et analysée dans lesdits noeuds mobiles. Chaque opérateur connecté par un noeud 1, 3 du réseau mobile 2 est ainsi apte à commander le robot mobile 3, à condition de disposer des autorisations nécessaires, et peut établir une communication vocale avec un opérateur humain à proximité du robot mobile 3.

Selon divers modes de réalisation de l'invention, l'interface 30 peut être complétée ou modifiée de façon à permettre la transmission de e-mails, de SMS (Short Message System), d'images, etc. L'interface 30 peut aussi comporter un client Internet, permettant de connecter le robot mobile dans un réseau TCP/IP mobile 2. Cette variante permet notamment au robot mobile 3 d'accéder à différents types de services via Internet, et d'être commandé au moyen de commandes transmises par Internet, notamment au moyen de commandes vocales transmises à travers Internet.

Le robot mobile 3 peut aussi comporter un serveur FTP ou http non représenté, permettant à n'importe quel opérateur distant 1, voire à n'importe quel internaute, de vérifier au moyen d'un simple client FTP ou http, par exemple au moyen d'un navigateur internet, l'état du robot mobile 3, notamment l'état de la machine séquentielle 317 et les signaux fournis par les capteurs 34, et de commander le robot mobile par ce canal.

Lorsque le robot mobile est muni d'une caméra 34 et d'un écran vidéo 35, une conférence vidéo peut être établie entre n'importe quel opérateur distant 1, 3 et un opérateur humain dans le champ de vision de la caméra 34.

L'homme du métier comprendra que les différents éléments et modules du robot mobile 3 illustrés sur la figure 1 peuvent être réalisés soit sous forme de circuit électronique, soit sous forme de logiciel.

Nous allons maintenant décrire plus en détail différentes possibilités d'application du robot mobile 3 décrit ci-dessus.

Pour le commander, un opérateur 1 doit tout d'abord établir une connexion avec le robot mobile 3, par exemple en composant le numéro téléphonique correspondant au module d'identification 300 dans le cas d'un réseau 2 de type téléphonique. Dans le cas d'un réseau à paquet, l'opérateur distant 1 doit envoyer ses paquets de données à l'adresse du robot mobile.

La banque de données d'utilisateurs 3170 indique pour chaque utilisateur, y compris pour les utilisateurs inconnus ou anonymes, les droits et privilèges. Chaque opérateur 1, 4 peut se voir attribuer plusieurs types de droits, par exemple le droit de déplacer le robot, le droit de communiquer avec l'entourage du robot, etc..; ces droits peuvent par exemple être mémorisés dans la banque de données d'utilisateurs 3170. Un opérateur particulier 1, 4 reçoit de préférence le droit d'administrer le robot, notamment de mettre à jour ses logiciels, d'attribuer d'autres droits, etc.., tandis que les autres opérateurs peuvent recevoir différents autres types de droits.

La banque de données 3170 comprend de préférence au moins l'identité d'un opérateur autorisé à déplacer le robot mobile, et à établir une communication bidirectionnelle avec l'entourage du robot mobile, et optionnellement une ou plusieurs identités d'opérateurs ayant des droits plus limités, par exemple uniquement le droit d'établir une communication bidirectionnelle.

Afin de vérifier les droits et les privilèges de l'opérateur, il est nécessaire de déterminer son identité. Dans une variante simple, cette identité est déterminée simplement en utilisant les fonctions de reconnaissance d'appelant du système GSM ou UMTS. L'identification d'appelant communiquée au téléphone 30 est communiquée par l'interface TAPI 319 à l'unité de traitement 31 et comparée avec les identités mémorisées dans la banque de données 3170 pour déterminer les droits de l'opérateur appelant. Cette solution permet uniquement de vérifier le terminal utilisé pour établir la connexion avec le robot mobile appelé 3, mais pas de déterminer l'identité de l'appelant au cas où le même terminal est utilisé par plusieurs appelants.

Dans une autre variante, cette identité est déterminée et/ou vérifiée au moyen d'un mot de passe, par exemple au moyen d'un code NIP introduit au moyen des touches du téléphone 1 (système DTMF) ou prononcé vocalement.

Dans une autre variante, cette identité est déterminée et/ou vérifiée à l'aide de paramètres biométriques de l'appelant, de préférence au moyen de caractéristiques de sa voix déterminée par le module de vérification d'appelant 318, ou de caractéristiques tirées du visage ou de l'oeil de l'appelant dans le cas d'un système à transmission d'images.

Dans une autre variante, cette identité est vérifiée au moyen d'une signature électronique d'un message digital envoyé par l'opérateur appelant 1, qui peut être signé au moyen d'un certificat électronique mémorisé dans un module d'identification 10 du terminal utilisé par l'opérateur appelant.

Ces différentes variantes peuvent également être combinées, et le robot mobile peut par exemple exiger un mot de passe parlé et une correspondance de la signature vocale obtenue à partir de ce mot de passe.

Un opérateur distant autorisé 1 peut ensuite commander les déplacements et les actions du robot au moyen de commandes vocales prédéfinies, de préférence au moyen de commandes de haut niveau de type "En avant", "A gauche", "Arrêt", "Retour au Parc", "Saisir l'objet", etc.. Le robot mobile 3 exécute les ordres reçus et envoie des confirmations, de préférences sous forme de messages vocaux générés par le synthétiseur vocal 313.

L'opérateur distant 1 peut faire passer le robot mobile en mode conversation au moyen d'une commande appropriée, par exemple " Mode Conversation". Dans ce cas, le multiplexeur 314 est commandé de façon à connecter directement le téléphone mobile 30 avec l'ensemble microphone/haut-parleur 32-33, et à permettre ainsi un dialogue vocal et/ou audiovisuel entre l'opérateur distant 1 et un opérateur à proximité 4. Le robot mobile retourne ensuite en mode commande lorsqu'une commande correspondante ("escape séquence") est détectée par le module 310, par exemple lorsque l'opérateur distant 1 prononce "Mode Commande".

Dans le cas d'un robot mobile muni d'une caméra ou d'autres capteurs 34, le mode conversation peut impliquer la transmission par le téléphone mobile 30 d'images ou d'autres signaux déterminés par le robot mobile.

Le mode commande peut par exemple être distingué très simplement du mode conversation en commençant chaque commande par une séquence spécifique, par exemple "Please do", suivi par une commande spécifique.

Le robot mobile peut également être commandé par l'opérateur à proximité 4, au moyen de commandes vocales reçues par le microphone 32. Les conflits en cas de commandes contradictoires reçues de l'opérateur distant 1 et l'opérateur à proximité 4 sont arbitrés par la machine séquentielle 317 à l'aide des indications contenues dans la banque de données d'utilisateurs 3170.

Nous allons maintenant donner à titre d'exemple un dialogue typique entre un opérateur distant 1 et un robot mobile utilisé comme majordome pour recevoir des visiteurs dans un bâtiment:
1. L'opérateur distant 1 sélectionne le numéro de téléphone du robot mobile 3. Le premier échange du dialogue est utilisé pour vérifier l'identité et les privilèges de l'opérateur distant 1, par exemple un abonné mobile. Dans ce but, le robot mobile invite l'opérateur distant 1 à indiquer son mot de passe. Le contenu syntaxique du mot de passe ainsi que la signature vocale déterminée par le module 318 à partir de cette réponse est utilisée pour vérifier les droits de l'appelant.
2. L'opérateur distant ordonne au robot mobile de se rendre à l'entrée du bâtiment et d'attendre un visiteur attendu à 9 heures, M. John Smith.
3. Le robot se déplace automatiquement vers l'entrée du bâtiment.
4. A 9 heures, le visiteur arrive et est accueilli par le robot mobile 3.
5. Le robot mobile 3 appelle l'opérateur distant 1 pour lui signaler l'arrivée de M. Smith.
6. L'opérateur distant 1 passe en mode communication pour souhaiter la bienvenue à M. Smith, via le haut-parleur 33 du robot mobile, et pour lui demander le but de sa visite.
7. M. Smith indique qu'il voudrait voir le centre de recherche. Sa réponse est transmise à l'opérateur distant par le microphone 32 et le réseau de téléphonie mobile 2.
8. L'opérateur distant 1 retourne en mode commande, et donne l'ordre au robot mobile de conduire M. Smith au centre de recherche.
9. Le robot mobile confirme l'exécution de cet ordre

Lorsque le coût global diminuera, d'autres applications possibles du robot mobile pourront comprendre:
■ Des animaux virtuels, utilisés par exemple comme jouet, habités par une voix humaine anonyme ou non.
■ Des robots permettant la visite à distance d'expositions, de musées, de sites historiques,.. et permettant de communiquer avec des personnes ou des robots au même endroit.
■ Des jeux ou compétitions, permettant d'inclure de nombreux participants au moyen de téléphones mobiles, par exemple des jeux de football pour robots, des jeux de découvertes, etc..
■ Des robots permettant de participer à des cours distants, avec possibilités de communication interactive avec les autres participants ou robots.
■ Des robots permettant d'effectuer ses achats à distance. Le robot appelle son opérateur en cas difficulté seulement; il permet à l'opérateur distant 1 de communiquer avec un vendeur 4 à proximité.
■ Des robots utilisés pour des applications de domotique, par exemple pour la surveillance d'appartements, et interrogeables à distance par leur propriétaire.
■ Des aides aux personnes âgées et handicapées.
■ Etc..

## Revendications

1. Robot mobile (3), comprenant:
- des moyens de déplacement autonomes (35)
- un microphone (32)
- un haut-parleur (33)
**caractérisé par**
- un module de téléphonie mobile (30),
un module d'analyse vocale (310), apte à interpréter des commandes vocales reçues au travers dudit module de téléphonie mobile pour commander les déplacements dudit robot mobile.

2. Robot mobile selon la revendication précédente, **caractérisé en ce que** ledit microphone (32) est relié audit module d'analyse vocale (310), permettant à un opérateur humain (4) à portée de voix dudit robot mobile de commander les déplacements dudit robot mobile (3) à l'aide de commandes vocales.

3. Robot mobile selon l'une des deux revendications précédentes, **caractérisé en ce que** ledit module d'analyse vocale (310) permet en outre de commander d'autres fonctions dudit robot mobile.

4. Robot mobile selon l'une des revendications précédentes, **caractérisé par** un module de synthèse vocale (313), permettant de synthétiser des réponses vocales et de les envoyer audit module de téléphonie mobile (30).

5. Robot mobile selon la revendication précédente, **caractérisé en ce que** ledit module de synthèse vocale (313) permet de synthétiser des réponses vocales et de les émettre par ledit haut-parleur (33).

6. Robot mobile selon l'une des revendications précédentes, **caractérisé en ce qu'**il permet d'établir une communication téléphonique bidirectionnelle entre un opérateur humain (4) à portée vocale dudit robot mobile et un utilisateur (1) connecté par l'intermédiaire d'un réseau de téléphonie mobile (2).

7. Robot mobile selon la revendication précédente, **caractérisé en ce qu'**il permet de distinguer entre des commandes de déplacement du robot mobile et des ordres vocaux destinés à être retransmis audit opérateur (4).

8. Robot mobile selon l'une des revendications précédentes, **caractérisé par** un ou plusieurs capteurs supplémentaires (34) lui permettant d'appréhender son environnement.

9. Robot mobile selon la revendication précédente, **caractérisé en ce qu'**au moins un desdits capteurs supplémentaires (34) est constitué par une caméra.

10. Robot mobile selon l'une des revendications précédentes, **caractérisé par** un ou plusieurs organes de restitution supplémentaires (36) lui permettant de communiquer avec son environnement.

11. Robot mobile selon la revendication précédente, **caractérisé en ce qu'**au moins un desdits organes de restitution supplémentaires (36) est constitué par un écran.

12. Robot mobile selon l'une des revendications précédentes, **caractérisé en ce qu'**il est muni d'un module d'identification d'abonné (300) dans un réseau téléphonique mobile (2).

13. Robot mobile selon la revendication précédente, dans lequel ledit module d'identification d'abonné (300) est une carte SIM.

14. Robot mobile selon l'une des revendications précédentes, permettant de vérifier l'identité de l'opérateur (1, 4).

15. Robot mobile selon la revendication précédente, dans lequel ladite identité est vérifiée à l'aide d'une signature électronique de l'opérateur.

16. Robot mobile selon la revendication 14, dans lequel ladite identité est vérifiée à l'aide d'un mot de passe introduit par l'opérateur (1, 4).

17. Robot mobile selon la revendication 14, dans lequel ladite identité est vérifiée à l'aide des caractéristiques biométriques de l'opérateur (1, 4).

18. Robot mobile selon la revendication précédente, dans lequel lesdites caractéristiques biométriques comprennent des caractéristiques tirées de la voix de l'opérateur (1, 4).

19. Robot mobile selon la revendication précédente, dans lequel lesdites caractéristiques biométriques comprennent des caractéristiques visuelles de l'opérateur (1, 4).

20. Robot mobile selon l'une des revendications précédentes, comprenant une banque de données d'utilisateurs (3170), indiquant les droits et les privilèges des opérateurs (1, 4) du robot mobile (3).

21. Robot mobile selon l'une des revendications précédentes, **caractérisé en ce que** ladite banque de données permet de distinguer entre les opérateurs (1, 4) ayant le droit de déplacer le robot et ceux pouvant uniquement établir une communication bidirectionnelle avec l'entourage du robot mobile.

22. Procédé de commande à distance d'un robot mobile (3) selon l'une des revendications précédentes, comportant une étape de :
établissement d'une connexion avec le robot mobile au travers d'un réseau téléphonique commuté (2),
**caractérisé par** les étapes suivantes:
envoi de commande vocales de déplacement du robot au travers de ladite connexion,
interprétation desdites commandes vocales par un module d'analyse vocale (310) dudit robot mobile (3)
commande du déplacement dudit robot mobile (3) en fonction desdites commandes vocales.

23. Procédé selon la revendication précédente, comportant une étape d'envoi d'une commande de passage en mode communication afin d'établir une communication avec un opérateur (4) à proximité dudit robot mobile.

24. Réseau de téléphonie mobile (2), comprenant des noeuds mobiles (1, 3), **caractérisé en ce que** au moins certains desdits noeuds mobiles (3) sont formés par des robots mobiles selon la revendication 1, leur position pouvant être commandée au moyen de commandes vocales transmises depuis n'importe quel noeud du réseau et analysée dans lesdits certains noeuds mobiles.

## Patentansprüche

1. Mobiler Roboter (3), enthaltend:
- autonome Bewegungsmittel (35)
- ein Mikrofon (32)
- einen Lautsprecher (33)
**gekennzeichnet durch**
- ein mobiles Telefoniemodul (30)
- ein Sprachanalysemodul (310), dazu geeignet, **durch** benanntes Telefoniemodul erhaltene Sprachbefehle zur Steuerung der Fortbewegung des benannten Roboters zu interpretieren.

2. Mobiler Roboter gemäss dem vorhergehenden Anspruch, **dadurch gekennzeichnet, dass** besagtes Mikrofon (32) mit besagtem Sprachanalysemodul (310) verbunden ist, was einer Bedienungsperson (4) in Hörweite von benanntem mobilen Roboter erlaubt, die Fortbewegung von benanntem mobilen Roboter (3) mit Hilfe von Sprachbefehlen zu steuern.

3. Mobiler Roboter gemäss einem der beiden vorhergehenden Ansprüche, **dadurch gekennzeichnet, dass** benanntes Sprachanalysemodul (310) ausserdem erlaubt, weitere Funktionen des benannten mobilen Roboters zu steuern.

4. Mobiler Roboter gemäss einem der vorhergehenden Ansprüche, **gekennzeichnet durch** ein Sprachsynthesemodul (313), das es erlaubt, Sprachantworten zu synthetisieren und an das benannte mobile Telefoniemodul (30) zu senden.

5. Mobiler Roboter gemäss dem vorhergehenden Anspruch, **dadurch gekennzeichnet, dass** besagtes Sprachsynthesemodul (313) es erlaubt, Sprachantworten zu synthetisieren und durch die Lautsprecher (33) auszusenden.

6. Mobiler Roboter gemäss einem der vorhergehenden Ansprüche, **dadurch gekennzeichnet, dass** eine bidirektionale Telefonkommunikation zwischen einer Bedienungsperson (4) in Hörweite vom benannten mobilen Roboter und einem durch ein mobiles Telefonnetzwerk (2) verbundenen Benutzer ermöglicht wird.

7. Mobiler Roboter gemäss dem vorhergehenden Anspruch, **dadurch gekennzeichnet, dass** er es ermöglicht, zwischen Befehlen zur Fortbewegung des mobilen Roboters und Sprachbefehlen zu unterscheiden, die an die benannte Bedienungsperson (4) weitervermittelt werden sollen.

8. Mobiler Roboter gemäss einem der vorhergehenden Ansprüche, **gekennzeichnet durch** einen oder mehrere zusätzliche Sensoren (34), die es ihm erlauben, seine Umgebung wahrzunehmen.

9. Mobiler Roboter gemäss dem vorhergehenden Anspruch, **dadurch gekennzeichnet, dass** mindestens einer der benannten zusätzlichen Sensoren (34) aus einer Kamera besteht.

10. Mobiler Roboter gemäss einem der vorhergehenden Ansprüche, **gekennzeichnet durch** eines oder mehrere zusätzliche Wiedergabeorgane (36), die es ihm ermöglichen, mit seiner Umgebung zu kommunizieren.

11. Mobiler Roboter gemäss dem vorhergehenden Anspruch, **dadurch gekennzeichnet, dass** mindestens eines der benannten zusätzlichen Wiedergabeorgane (36) aus einer Anzeige besteht.

12. Mobiler Roboter gemäss einem der vorhergehenden Ansprüche, **dadurch gekennzeichnet, dass** er mit einem Benutzeridentifizierungsmodul (300) in einem mobilen Telefonnetzwerk (2) ausgestattet ist.

13. Mobiler Roboter gemäss dem vorhergehenden Anspruch, worin das benannte Benutzeridentifizierungsmodul (300) eine SIM Karte ist.

14. Mobiler Roboter gemäss einem der vorhergehenden Ansprüche, der es ermöglicht, die Identität der Bedienungsperson (1, 4) zu überprüfen.

15. Mobiler Roboter gemäss dem vorhergehenden Anspruch, worin die benannte Identität durch eine elektronische Signatur der Bedienungsperson verifiziert wird.

16. Mobiler Roboter gemäss dem Anspruch 14, worin die benannte Identität durch ein von der Bedienungsperson (1, 4) geliefertes Passwort verifiziert wird.

17. Mobiler Roboter gemäss dem Anspruch 14, worin die benannte Identität durch biometrische Merkmale der Bedienungsperson (1, 4) verifiziert wird.

18. Mobiler Roboter gemäss dem vorhergehenden Anspruch, worin die benannten biometrischen Merkmale der Stimme der Bedienungsperson (1, 4) entnommenen Merkmale umfassen.

19. Mobiler Roboter gemäss dem vorhergehenden Anspruch, worin benannte biometrische Merkmale visuelle Merkmale der Bedienungsperson (1, 4) umfassen.

20. Mobiler Roboter gemäss einem der vorhergehenden Ansprüche, umfassend eine Benutzerdatenbank (3170), welche die Rechte und Privilegien der Bedienungspersonen (1, 4) des mobilen Roboters (3) angeben.

21. Mobiler Roboter gemäss einem der vorhergehenden Ansprüche, **dadurch gekennzeichnet, dass** die benannte Datenbank es ermöglicht, zwischen den Bedienungspersonen (1, 4), die das Recht haben, den Roboter zu verstellen, und solchen, die nur eine bidirektionale Kommunikation mit der Umgebung des mobilen Roboters herstellen können, zu unterscheiden.

22. Verfahren zur ferngesteuerten Steuerung eines mobilen Roboters (3) gemäss einem der vorhergehenden Ansprüche, beinhaltend einen Schritt von:
Herstellen einer Verbindung mit dem mobilen Roboter durch ein umschaltbares Telefonnetzwerk (2),
**gekennzeichnet durch** die folgenden Schritte:
Senden von Sprachbefehlen zur Bewegung des benannten Roboters über die benannte Verbindung,
Interpretieren der benannten Sprachbefehle **durch** ein Sprachanalysemodul (310) des benannten mobilen Roboters (3),
Steuerung der Fortbewegung des benannten mobilen Roboters (3) gemäss den benannten Sprachbefehlen.

23. Verfahren gemäss dem vorhergehenden Anspruch, umfassend einen Schritt des Sendens eines Befehls zur Umschaltung auf den Kommunikationsbetrieb, um eine Kommunikation mit einer Bedienungsperson (4) nahe dem benannten mobilen Roboter herzustellen.

24. Mobiles Telefonnetzwerk (2), umfassend mobile Knoten (1, 3), **dadurch gekennzeichnet, dass** mindestens bestimmte der benannten mobilen Knoten (3) durch mobile Roboter gemäss Anspruch 1 gebildet werden, wobei ihre Position durch Sprachbefehle von einem beliebigen Knoten im Netzwerk gesteuert und innerhalb benannter bestimmter Knoten analysiert werden kann.

## Claims

1. Mobile robot (3), comprising:
- autonomous displacement means (35)
- a microphone (32)
- a loudspeaker (33)
**characterized by**
- a mobile telephony module (30)
- a voice analysis module (310) capable of interpreting voice commands received through said mobile telephony module in order to control the displacements of said mobile robot.

2. Mobile robot according to the preceding claim, **characterized in that** said microphone (32) is connected to said voice analysis module (310), enabling a human operator (4) within earshot of said mobile robot to control the displacements of said mobile robot (3) through voice commands.

3. Mobile robot according to one of the two preceding claims, **characterized in that** said voice analysis module (310) furthermore allows other functions of said mobile robot to be controlled.

4. Mobile robot according to one of the preceding claims, **characterized by** a voice synthesis module (313) allowing voice responses to be synthesized and sent to said mobile telephony module (30).

5. Mobile robot according to the preceding claim, **characterized in that** said voice synthesis module (313) allows voice responses to be synthesized and emitted by the loudspeaker (33).

6. Mobile robot according to one of the preceding claims, **characterized in that** a bi-directional telephone communication can be established between a human operator (4) within earshot of said mobile robot and a user (1) connected through a mobile telephony network (2).

7. Mobile robot according to the preceding claim, **characterized in that** it makes it possible to distinguish between commands for displacing the mobile robot and voice commands intended to be retransmitted to said operator (4).

8. Mobile robot according to one of the preceding claims, **characterized by** one or several additional sensors (34) enabling it to perceive its environment.

9. Mobile robot according to the preceding claim, **characterized in that** at least one of said additional sensors (34) is constituted by a camera.

10. Mobile robot according to one of the preceding claims, **characterized by** one or several additional reproducing organs (36) enabling it to communicate with its environment.

11. Mobile robot according to the preceding claim, **characterized in that** at least one of said additional reproducing organs (36) is constituted by a display.

12. Mobile robot according to one of the preceding claims, **characterized in that** it is provided with a subscriber identification module (300) in a mobile telephone network (2).

13. Mobile robot according to the preceding claim, wherein said subscriber identification module (300) is a SIM card.

14. Mobile robot according to one of the preceding claims, enabling the identity of the operator (1, 4) to be verified.

15. Mobile robot according to the preceding claim, wherein said identity is verified through an electronic signature of the operator.

16. Mobile robot according to claim 14, wherein said identity is verified through a password given by the operator (1, 4).

17. Mobile robot according to claim 14, wherein said identity is verified through biometric characteristics of the operator (1, 4).

18. Mobile robot according to the preceding claim, wherein said biometric characteristics comprise characteristics taken from the voice of the operator (1, 4).

19. Mobile robot according to the preceding claim, wherein said biometric characteristics comprise visual characteristics of the operator (1, 4).

20. Mobile robot according to one of the preceding claims, comprising a user data bank (3170) indicating the rights and privileges of the operators (1, 4) of the mobile robot (3).

21. Mobile robot according to one of the preceding claims, **characterized in that** said data bank makes it possible to distinguish between the operators (1, 4) that have the right to displace the robot and those that can only establish a bi-directional communication with the mobile robot's environment.

22. Method for the remote controlling of a mobile robot (3) according to one of the preceding claims, comprising a step of:
establishing a connection with the mobile robot through a commuted telephone network (2),
**characterized by** the following steps:
sending voice commands for displacing the robot through said connection,
interpreting said voice commands by a voice analysis module (310) of said mobile robot (3),
commanding the displacement of said mobile robot (3) according to said voice commands.

23. Method according the preceding claim, comprising a step of sending a command for switching to communication mode in order to establish a communication with an operator (4) near said mobile robot.

24. Mobile telephony network (2) comprising mobile nodes (1, 3), **characterized in that** at least certain of said mobile nodes (3) are formed by mobile robots according to claim 1, their position being controllable through voice commands transmitted from any node in the network and analyzed within said certain mobile nodes.
